Europäisches Patentamt

European Patent Office

Office européen des brevets

(19)

(11) EP 0 953 826 A2

## (12) EUROPEAN PATENT APPLICATION

(43) Date of publication:
03.11.1999 Bulletin 1999/44

(51) Int Cl.⁶: **G01C 21/20**

(21) Application number: 99303301.8

(22) Date of filing: 28.04.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **28.04.1998 JP 11941898**

(71) Applicant: **PIONEER ELECTRONIC CORPORATION Meguro-ku Tokyo-to (JP)**

(72) Inventors:
• **Hayashi, Katsuyoshi, c/o Pioneer Electronic Corp. Oaza-Yamada, Kawagoe-shi, Saitama-ken (JP)**

• **Yano, Kenichiro, c/o Pioneer Electronic Corp. Oaza-Yamada, Kawagoe-shi, Saitama-ken (JP)**
• **Mochizuki, Keisuke, c/o Pioneer Electronic Corp. Oaza-Yamada, Kawagoe-shi, Saitama-ken (JP)**

(74) Representative: **Downing, Michael Philip et al Fry Heath & Spence, The Old College, 53 High Street Horley, Surrey RH6 7BN (GB)**

## (54) Apparatus for displaying characters and symbols on map for use in navigation system

(57) An apparatus (S) for displaying a map and a plurality of map information pieces on a display panel (16) for use in a navigation system (S) is provided. The plurality of map information pieces includes at least a plurality of sets of characters (25, 26, 27, 30) representing names of spots existing on the map, respectively. The apparatus including: a map display device (12) for displaying the map on the display panel; a map rotation device (6) for rotating the map on the display panel; a selection device (6) for selecting one of the plurality of map information pieces; a determination device (6) for determining according to an angle of a rotation of the map whether or not the selected map information piece is displayed on the map; and an information display device (6, 12) for displaying the selected map information piece if the determination device determines that the selected map information piece is displayed on the map.

FIG. 5

**Description**

BACKGROUND OF THE INVENTION

1. Field of the Invention

The present invention relates to a navigation system for displaying a route of a movable body such as a vehicle, place names and names of institutions and facilities in the vicinity of the route, and the like together with a map in order to navigate the movable body, and more particularly, to control of display of characters or symbols representing the place names, the names of the institutions and facilities, and the like.

2. Description of the Related Art

A typical navigation system is configured so as to display a symbol (navigation mark) indicating the present position of a movable body on a map in an overlapping manner, thereby effecting a route guidance up to a destination. Such a navigation system is used, for example, as a positioning device for a vehicle. an airplane, a ship, and the like.

As a navigation system mounted on a vehicle, there are a self-sustained type navigation system and a GPS (Global Positioning System) type navigation system. The former is an apparatus where an advancing or travelling direction and a distance of the vehicle are captured by self-sustained sensors such as a speed sensor, an angular velocity sensor, and the like and the present position of the vehicle is calculated on the basis of the data captured. The latter is an apparatus where positioning waves from a plurality of GPS artificial satellites which have been launched in the space are received by a GPS receiver and the present position of the vehicle is calculated on basis of the received results by a 2-dimensional measuring method or a 3-dimensional measuring method. Further, a navigation system with both the functions of the self-sustained type and the GPS type, so-called a hybrid type navigation system, is recently being widespread.

In such a navigation system, as the present position of a vehicle is displayed together with a map, the driver can visually grasp the present position of his/her own vehicle and roads and institutions around the present position. Therefore, the driver can arrive at a destination without missing his/her way, even when he/she runs or travels through a strange area.

Furthermore, in the navigation system for a vehicle, not only the present position of the vehicle but also sets of characters, or character strings, and symbols representing names of roads and/or institutions existing on a map are simultaneously displayed on the same screen. Accordingly, the driver can obtain information about the roads and the areas about his/her vehicle

A map displayed in the conventional navigation system was generally a plan view. However, a navigation system displaying a map using a bird eye view has been developed recently. A map with a wider area can be displayed in one screen and the display of the map can be given realism by displaying the map with the bird eye view.

The map display using the bird eye view is realized by displaying the map so as to view the map from the sky downwardly and obliquely in an advancing direction of the vehicle. For example, the bird eye view is generated by displaying one-point perspective projection view prepared by setting a virtual view point in the sky and seeing through a topography corresponding to the map from the view point in the advancing direction of the vehicle. A basic technique of the map display using the bird eye view is now applied to a flight simulator or the like.

However, in a case that characters (character strings) and symbols representing names of roads and institutions, etc. are displayed on the map using such a bird eye view, there occur the following problems.

In the bird eye view, generally, an image at a position close to the virtual view point is displayed with a relatively large contraction scale, while an image at a position far therefrom is displayed with a relatively small contraction scale. Accordingly, since roads and institutions at a position far from the virtual view point are further scaled down to be displayed in one screen, the number of roads and institutions are increased. As a result, characters and symbols representing names of roads and institutions positioned far from the virtual view point are excessively displayed on the screen, whereby the contents of the characters and symbols can not be determined or interpreted. Furthermore, when the sizes of the characters and symbols displayed in the bird eye view are the same, the characters and symbols become complicated.

On the other hand, when characters and symbols are displayed on the map using the bird eye view, there are other problems as described below.

In the navigation system for a vehicle, the advancing direction of the vehicle is displayed upwardly on the map. Therefore, when the advancing direction of the vehicle is changed, the map is rotated so as to keep the advancing direction of the vehicle upward. When the map is rotated, the positional relationship of the roads and the institutions displayed on the map is changed. Accordingly, it is also necessary to change displaying positions of the characters and symbols representing the roads and the institutions. At this time, it is difficult to rearrange all the characters and symbols which have been displayed without overlapping with one another. For example, after the map has been rotated, such a case sometimes occurs that one end of one character string and one end of another character string adjacent to the one character string are overlapped with each other so that it becomes difficult to determine or interpret both the contents of these character strings.

Also, though a method for changing an arranging direction of characters according to the rotation of the map is thought or proposed, it is difficult to prevent characters (character strings) from overlapping completely even by this method.

SUMMARY OF THE INVENTION

An object of the present invention is therefore to provide a navigation system which prevents such a situation that navigation marks such as characters, symbols and the like can not be determined or read out and which is capable of displaying a map easy to see.

The above mentioned object can be achieved by a displaying apparatus for use in a navigation system according to the present invention. The displaying apparatus is an apparatus for displaying a map and a plurality of map information pieces on a display panel. The plurality of map information pieces includes at least a plurality of sets of characters representing names of spots existing on the map, respectively. The apparatus includes: a map display device for displaying the map on the display panel; a map rotation device for rotating the map on the display panel; a selection device for selecting one of the plurality of map information pieces; a determination device for determining according to an angle of a rotation of the map whether or not the selected map information piece is displayed on the map; and an information display device for displaying the selected map information piece on the map if the determination device determines that the selected map information piece is displayed on the map.

In this apparatus, when the map on the display panel is rotated by the rotation device, the selection device firstly selects one of the plurality of map information pieces. The determination device secondly determines according to an angle of a rotation of the map whether or not the selected map information pieces is displayed on the map. If the determination device determines that the selected map information pieces should be displayed on the map, the selected map information piece is displayed on the map. If the determination device determines that the selected map information pieces should not be displayed on the map, the selected map information piece is not displayed.

Thus, according the angle of the rotation of the map, it is determined whether or not each map information piece is displayed on the map. Therefore, it can be determined whether or not each map information piece is displayed on the map, in such a way that overlap of the map information pieces is prevented, each time the map is rotated. Accordingly, the map information pieces can be display on the map distinctly and understandably regardless of the angle of the rotation of the map.

In the displaying apparatus, the determination device may include an overlap determination device for determining whether or not there is no map information piece that overlaps with the selected map information piece, among the plurality of map information pieces except for the selected map information piece, according to the angle of the rotation of the map. Then, the selected map information piece is displayed on the map if the overlap determination device determines that there is no map information piece that overlaps with the selected map information piece. Accordingly, it is possible to prevent overlap of the map information pieces.

Further, in the displaying apparatus, the determination device may includes a priority comparison device for comparing priority of the selected map information piece with priority of any one of the plurality of map information pieces that overlaps with the selected map information piece. For example, if the selected map information piece overlaps with another map information piece, the priority comparison device compares priority of the selected map information piece with that of the overlapping map information piece. Then, it is determined whether or not the selected map information piece has priority over the overlapping map information piece. If the selected map information piece has priority over the overlapping map information, the selected map information piece is displayed on the map, and the overlapping map information piece is not displayed on the map. Accordingly, it is possible to prevent overlap of the map information pieces.

Further, in the display apparatus, the determination device may includes a storage device for storing a table in which data indicating for each predetermined unit of the angle of the rotation of the map whether or not each of the plurality of map information pieces is displayed on the map. If the determination device determines by using this table whether or not the selected map information piece is displayed on the map, it can be easily determined whether or not the selected map information piece is displayed on the map.

Furthermore, in the displaying apparatus, the plurality of map information pieces may include a plurality of sets of characters representing names of places, roads, facilities and institutions existing on the map, respectively.

Moreover, in the displaying apparatus, the plurality of map information pieces may include a plurality of symbols representing names of places, roads, facilities and institutions existing on the map, respectively.

The above mentioned object can be also achieved by another displaying apparatus for use in a navigation system according to the present invention. The displaying apparatus is an apparatus for displaying a map and a plurality of map information pieces on a display panel. The plurality of map information pieces includes at least a plurality of sets of characters representing names of spots existing on the map, respectively. The apparatus includes: a map displaying device for displaying the map as a bird eye view on the basis of a predetermined view point and a predetermined line of sight; a selection device for selecting one of the plurality of map information pieces; a first determination device for determining a display position of the selected map information piece in a direction along the predetermined line of sight in the bird eye view within the map; a second determination device for determining according to the display position of the selected map information piece whether or not the selected map information piece is displayed on the map; and a display control device for displaying the selected map information piece on the map if the determination device determines that the selected map information piece is displayed on the map.

In this apparatus, the map displaying device displays the map as the bird eye view on the basis of the predetermined view point and the predetermined line of sight. That is, the map displaying device produces the bird eye view by displaying the map so as to view the map from the predetermined view point along the predetermined line of sight. Then, the selection device selects one of the plurality of map information pieces. Next, the first determination device determines a display position of the selected map information piece in a direction along the predetermined line of sight in the bird eye view within the map. Therefore, it can be determined whether the display position of the selected map information piece is positioned distant from the predetermined view point or near the predetermined view point. Next, the second determination device determines according to the display position of the selected map information piece whether or not the selected map information piece should be displayed on the map. If the determination device determines that the selected map information piece should be displayed, the selected map information is displayed on the map.

Thus, it is determined whether or not each map information piece is displayed on the map, depending on whether the display position of the selected map information piece is positioned distant from the predetermined view point or near the predetermined view point.

In the bird eye view, an image at a position near the predetermined view point is displayed with a relatively large contraction scale, while an image at a position distant from the predetermined view point is displayed with a relatively small contraction scale. Therefore, if the display position of the selected map information piece is near the predetermined view point, this map information piece may be displayed on the map. If the display position of the selected map information piece is distant from the predetermined view point, it is needed to determined whether or not this map information pieces is displayed on the map, in consideration of the number of other map information pieces located in the vicinity of the display position of the selected map information piece, or depending on whether or not the selected map information piece overlaps with other map information pieces. Thus, by recognizing the display position of each of the map information pieces, such a determination can be carried out. For example, if it is determined that the selected map information piece is not displayed when there are a large number of other map information piece in the vicinity of the display position of the selected map information, the map information pieces can be display on the map distinctly and understandably, if the map is displayed as the bird eye view.

In the displaying apparatus, the first determination device may divide the map into a plurality of regions by boundary lines each crossing the predetermined line of sight in the bird eye view, and determine which of the plurality of regions the selected map information piece is positioned in. Since the map is divided into a plurality of regions by boundary lines each crossing the predetermined line of sight, the respective areas have different distances from the predetermined view point. Therefore, by determining which of the areas the selected map information pieces is positioned in, it can be easily determined whether the display position of the selected map information piece is positioned distant from the predetermined view point or near the predetermined view point.

Further, in the displaying apparatus, the second determination device may determine whether or not the selected map information piece is displayed on the map, in such a way that the number of the map information pieces to be displayed within any one of the plurality of regions located distant from the predetermined view point in the bird eye view is smaller than the number of the map information pieces to be displayed within any one of the plurality of regions located near the view point. Accordingly, the map information pieces can be display on the map distinctly and understandably, if the map is displayed as the bird eye view.

Further, in the displaying apparatus, the second determination device may includes a storage device for storing a table in which data indicating for each of the plurality of regions whether or not each of the plurality of map information pieces is_displayed on the map. The second determination device determines by using this table whether or not the selected map information piece is displayed on the map. Therefore, it can be easily determined whether or not the selected map information piece is displayed on the map.

Further, in the displaying apparatus, the second determination device may determine according to the display position of the selected map information piece and priority of the selected map information piece whether or not the selected map information piece is displayed on the map. Therefore, the map information pieces can be displayed according to the order of priority.

Furthermore, in the displaying apparatus, the map displaying device may scroll the map according to a movement of a movable body on which the apparatus is mounted. The selection device, the first determination device, the second determination device and the display control device are operated each time the map displaying device scrolls the map. Therefore, the map information pieces can be display on the map distinctly and understandably, while the map is being scrolled.

Furthermore, in the displaying apparatus, the plurality of map information pieces may include a plurality of sets of characters representing names of places, roads, facilities and institutions existing on the map, respectively.

Moreover, in the displaying apparatus, the plurality of map information pieces may include a plurality of symbols representing names of places, roads, facilities and institutions existing on the map, respectively.

The nature, utility, and further feature of this invention will be more clearly apparent from the following detailed description with respect to preferred embodiments of the invention when read in conjunction with the accompanying drawings briefly described below.

## BRIEF DESCRIPTION OF THE DRAWINGS

FIG. 1 is a block diagram showing a navigation system for a vehicle according to an embodiment of the present invention;

FIG. 2A is a diagram showing a first table used for a first character displaying process according to the navigation system for a vehicle of the embodiment;

FIG. 2B is a diagram showing a reference for rotation angle in rotation angle data used in the first table;

FIG. 3 is a flowchart showing the first character displaying process of the embodiment;

FIG. 4 is an illustration showing examples of screens which have been displayed on a display according to the first character process of the embodiment;

FIG. 5 is an illustration showing other examples of screens which have been displayed on the display according to the first character process of the embodiment;

FIG. 6 is a diagram explaining a bird eye view generating process of the embodiment;

FIG. 7 is a flowchart showing the bird eye view generating process;

FIG. 8 is a diagram showing the contents of a second table used for a second character displaying process of the embodiment;

FIG. 9 is a flowchart showing the second character displaying process; and

FIGS. 10A to 10C are illustrations showing examples of screens which have been displayed on the display according to the second character displaying process.

## DETAILED DESCRIPTION OF THE PREFERRED EMBODIMENTS

An embodiment of the present invention will be described below with reference to the drawings. In the description set forth hereinafter, the present invention is applied to a navigation system for a vehicle.

(I) Configuration of Vehicle Navigation System

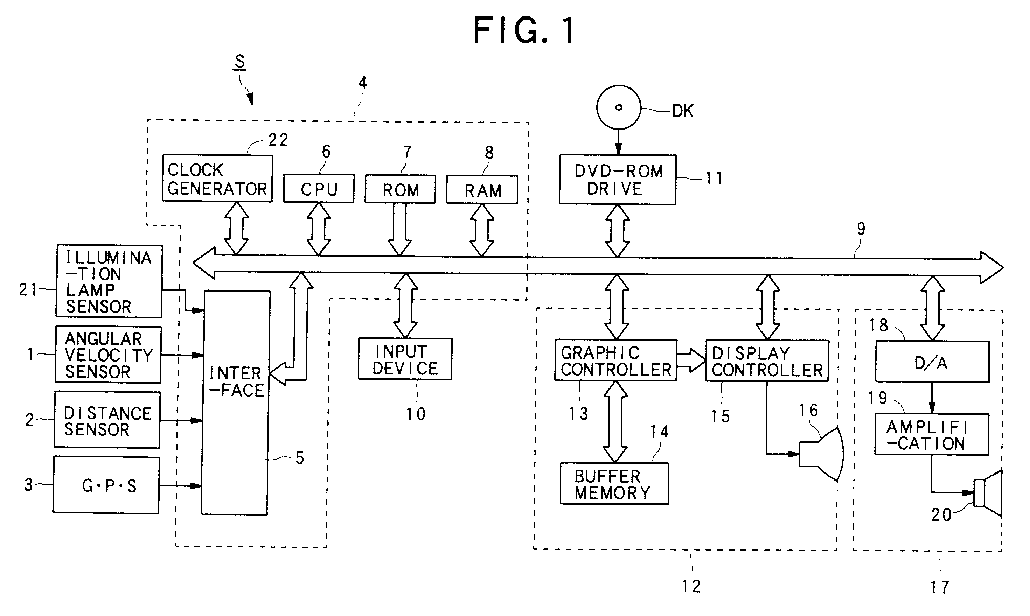

Referring to FIG. 1, a configuration of a vehicle navigation system S according to the embodiment of the present invention will be described.

The vehicle navigation system S includes: an angular velocity sensor 1 for detecting an angular velocity of a vehicle produced when the advancing direction of the vehicle is changed to output angular velocity data and relative azimuth data; a distance sensor 2 for counting the number of pulses in a pulse signal output according to rotation of a road wheel of the vehicle to calculate the number of pulses per wheel rotation and outputting distance data based upon the number of pulses per wheel rotation; a GPS receiver 3 for receiving waves from GPS artificial satellites to output GPS positioning data and outputting absolute azimuth data of the advancing direction of a driver's own vehicle; an illumination lamp sensor 21 for determining whether or not an illumination lamp (namely, illumination for such equipment as a speed meter and the like in the vehicle occupant compartment) has been turned on; a system controller 4 for controlling the whole navigation system on the basis of the relative azimuth data, the angular velocity data, the distance data, the GPS positioning data and the absolute azimuth data; an input device 10 for inputting various data, such as a remote control device; a DVD-ROM drive 11 for reading out various data such as road data including the number of road lanes, the width of a road, and the like, and control programs corresponding to respective embodiments (described later) from a DVD-ROM drive serving as storing means and recording medium under control of the system controller 4 to output the same; a displaying unit 12 for displaying various display data under control of the system controller 4; and a sound reproducing unit 17 for reproducing various sound or voice data under control of the system controller 4.

The system controller 4 includes: an interface section 5 for interfacing with external sensors such as the GPS receiver 3 and the like; a CPU 6 for controlling the whole system controller 4; a ROM (Read Only Memory) 7 where a basic control program for controlling the system controller 4 and the like are stored; a RAM (Random Access Memory) 8 having a non-volatile memory (not shown) and readably storing various data such as the route data or the like preliminarily set by a user through the input device 10; and a clock generator 22 for clocking the present time or the like on the basis of particularly time data received in the GPS receiver from the GPS satellites. The input device 10, the DVD-ROM drive 11, the displaying unit 12 and the sound reproducing unit 17 are connected among them through a bus line 9. The CPU 6 included in the system controller 4 mainly performs a map rotating process, a first character displaying process, a bird eye view generating process, and a second character displaying process, which are described later.

The displaying unit 12 includes: a graphic controller 13 for controlling the whole displaying unit 12 on the basis of control data sent from the CPU 6 through the bus line 9; a buffer memory 14 including such a memory as VRAM (Video RAM) or the like and temporarily storing image information which can be displayed in real time; and a display controller 15 for effecting display control on a display 16 serving as displaying means, such as a liquid crystal panel, a CRT (Cathode Ray Tube) or the like, on the basis of image data output from the graphic controller 13.

The sound reproducing unit 17 includes: an A/D converter 18 for conducting an A/D conversion of the sound digital data sent from the DVD-ROM drive 11 or the RAM 8 through the bus line 9; an amplifier 19 for amplifying the sound analog signal output from the A/D converter 18; and a speaker 20 for converting the amplified sound analog signal into sound or voice to output the same.

(II) Character Displaying Process for Map Rotation

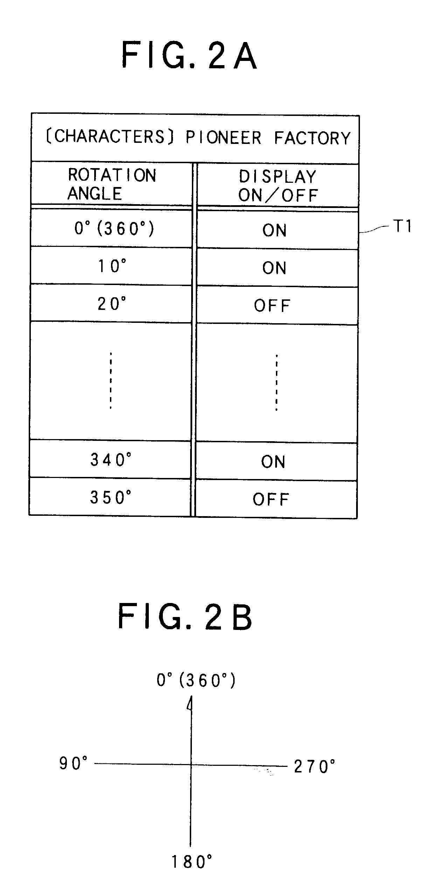

Referring to FIGS. 2A to 5, the map rotation process and the character displaying process (the first character displaying process) effected along with the map rotation process in the vehicle navigation system S will be described.

In the vehicle navigation system S of the embodiment, the map is displayed on the display 16 in a so-called head-up displaying manner. That is, the map is displayed such that the advancing direction of the vehicle is always directed upwardly on the display 16. Accordingly, when the advancing direction of the vehicle is changed, the map is rotated correspondingly. Such a map rotation is mainly controlled by the CPU 6.

A well-known technique in the art is applied for the map rotation process where the map is rotated according to the advancing direction of the vehicle. However, the navigation system S according to the embodiment of the present invention performs the novel character displaying process (first character displaying process) together with the map rotation process.

FIG. 2A shows a first table T1 for implementing the first character displaying process. First display control information used for the first character display process is recorded in the table T1. The table T1 and a plurality of other first tables having the same configuration as that of the table T1 are recorded in the DVD-ROM disk DK. When the first character displaying process is effected, part or all of the tables are read out from the DVD-ROM disk DK by the DVD-ROM drive 11 to be stored, for example, in the RAM 8.

The plurality of the tables stored in the DVD-ROM disk DK are respectively assigned to individual character strings representing names of roads, names of institutions, place names, and information regarding the other geography to be displayed together with the map. Also, not only the character strings but also symbols representing institutions, map symbols, and individual symbols regarding the other geography are respectively assigned with a plurality of the tables.

The table T1 shown in FIG. 2A is a table which has been assigned to a character string "PIONEER FACTORY" used for showing a position of the factory whose name is Pioneer Factory on a map. A plurality of pieces of first displaying control information for determining whether or not the character string "PIONEER FACTORY" should be displayed on the map are described in the table T1.

The pieces of first displaying control information are information about whether the character string "PIONEER FACTORY" should be displayed or it should be not displayed (ON or OFF) according to rotation angle of the map. In an example shown in FIG. 2A, the displaying control information is set for each 10° of rotation angle of the map. It is to be noted that the displaying control information may be set for each one of 1° to 9° or for each at least 11°. For example, it may be set for each 30°, 45°, 60° or 90 °.

The first displaying control information described in the table T1 is prepared by a manufacturer of the navigation system S or the like as follows: First, a map where the Pioneer Factory exists is displayed in fact or experimentally, so that a character string "PIONEER FACTORY" and character strings representing other roads and institutions close to the Pioneer Factory are displayed on the map. Next, a determination is made about whether or not the character string "PIONEER FACTORY" overlaps with other character strings while the map is being rotated for each 10°. When the character string "PIONEER FACTORY" overlaps with the other character strings, the priority of the character string "PIONEER FACTORY" and that of the other character strings are next compared with each other. When the priority of the "PIONEER FACTORY" is higher than that of the other character strings, the displaying control information corresponding to the rotation angle of the map at the time is set to be "ON". When the priority of the "PIONEER FACTORY" is lower, the displaying control information corresponding to the rotation angle of the map at the time is set to be "OFF".

The priority of the character string or the symbol is set according to necessity of the character string. The priority of the character string or the symbol is set by a manufacturer in the following order.

　　　(i) a character string and a symbol regarding a railway
　　　(ii) a character string and a symbol regarding a road
　　　(iii) a character string and a symbol showing a name of an institution or a facility
　　　(iv) a character string and a symbol showing a place name

That is, the priority of (i) a character string and a symbol regarding a railway is the highest as compared with those of the other three. On the other hand, the priority of (iv) a character string and a symbol showing a place name is the lowest as compared with the other three.

The rotation angle of the map in the table T1 is defined as shown in FIG. 2B. That is, the rotation angle of the map displayed when the advancing direction of the vehicle (an upward direction on the display 16) is directed to the north is 0°. When the map is rotated by 10° in a right direction (in a counterclockwise direction) on the basis of the 0°, the rotation angle of the map is 10°. When the map is rotated by 10° in a left direction (in a clockwise direction), the rotation angle of the map is 350°.

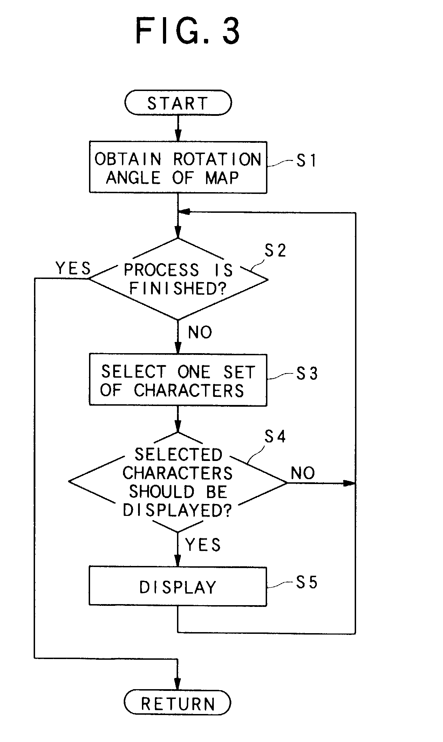

FIG. 3 is a flowchart showing the first character displaying process using a plurality of first tables including the table T1. It is to be noted that the character displaying process is executed mainly by the CPU 6 when the map is initially displayed on the display 16 or when a requirement for displaying the map with a different rotation angle occurs. The requirement for displaying the map with the different rotation angle occurs when the advancing direction of the vehicle is changed or when a command instructing the change of the rotation angle of the map is input into the navigation system S through an operation of the driver on the input device 10. Furthermore, a program corresponding to the flowchart of FIG. 3 is stored as a control program in the DVD-ROM disk DK in advance, and it is read out through the DVD-ROM drive 11 as occasion demands.

As shown in FIG. 3, when the first character displaying process is executed, the CPU 6 initially obtains the present rotation angle of the map (step S1). For example, when the driver operates the input device 10 to set a rotation angle of the map, the CPU 6 detects the rotation angle to obtain the rotation angle of the map. Also, when the advancing direction of the vehicle is changed, the CPU 6 detects the advancing direction of the vehicle on the basis of output values of the GPS receiver 1 or respective sensors to calculate the rotation angle of the map based upon the detection.

After the rotation angle of the map is obtained, the CPU 6 determines whether or not processes of steps 3 to 5 for all character strings and symbols which can be displayed on the display 16 together with the map have been completed (step S2). When the processes have been completed, the first character displaying process is finished. On the other hand, when the processes of steps 3 to 5 for the all character strings and symbols have not been completed yet, the CPU 6 selects one of the character strings or symbols which have not been processed yet (step S3).

Next, the CPU 6 reads out a first table assigned to the selected character string or symbol from the DVD-ROM disk DK. Then, the CPU 6 obtains from this first table first display control information corresponding to the present rotation angle of the map. Further, the CPU 6 determines whether or not the obtained display control information is ON (step S4).

When the obtained display control information is ON, the CPU 6 displays the selected character string or symbol on the map (step S5). On the other hand, when the obtained display control information is OFF, the CPU 6 does not display the selected character string or symbol on the map.

Thus, the CPU 6 executes the processes of steps 3 to 5 for the all character strings and symbols which can be displayed on the display 16 along with the map at the present time.

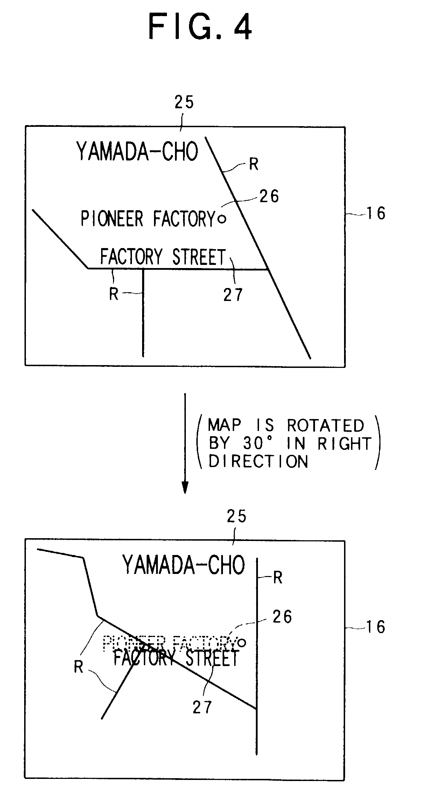

Referring to FIG. 4, one example of the first character displaying processes as described above will be explained. First, as shown in an upper stage of FIG. 4, a character string "YAMADA-CHO" 25, a character string "PIONEER FACTORY" 26 and a character string "FACTORY STREET" 27 are displayed in addition to roads R. Display positions of these character strings 25 to 27 are determined in advance according to the position of the road, the position of the factory, and the situation of the geography.

Next, it is assumed that the map is rotated by 30° in a right direction. In this case, when all the character strings 25 to 27 are displayed without using the first character displaying process mentioned above, the character string 26 and the character string 27 overlap with each other, so that it becomes difficult to determine or interpret both the character strings 26 and 27. On the contrary, if the first character displaying process described above is used, sincethe character string 26 is removed, it becomes possible to determine the character string 27, as shown in a lower stage in FIG. 4.

For implementing such a character displaying process, in the table assigned to the character string 27, the character control information corresponding to the rotation angle 30° is set to be ON. In the table T1 assigned to the character string 26, the character control information corresponding to the rotation angle 30° is set to OFF.

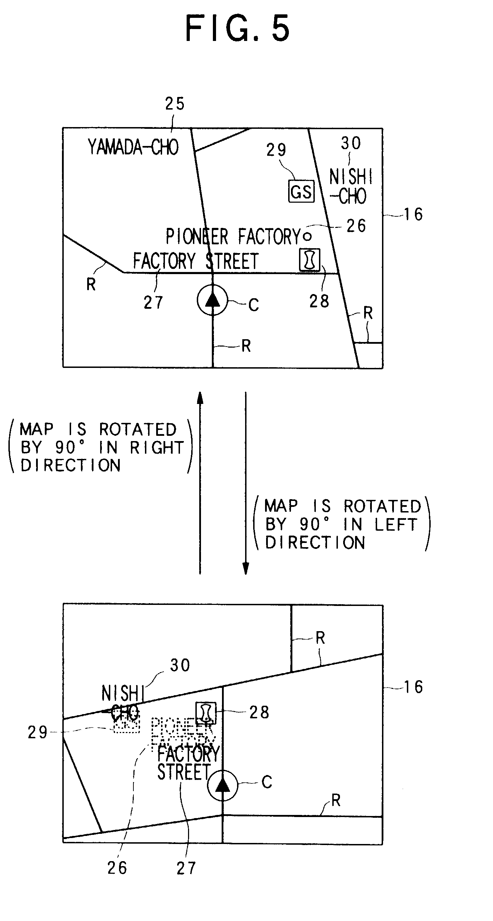

Referring next to FIG. 5, another example of the first character displaying process set forth above will be explained. First, as shown in an upper stage in FIG. 5, the character string "YAMADA-CHO" 25, the character string "PIONEER FACTORY' 26, the character string "FACTORY STREET" 27, a symbol 28 showing a bank, a symbol 29 showing a gas station, a character string "NISHI-CHO" 30, and a his/her own vehicle position symbol C showing the present position of his/her vehicle are displayed on the display 16 in addition to roads R.

Next, it is assumed that the vehicle turns the right at a crossing point S1 so that the map is rotated by 90° in a left direction. Further, it is assumed that the arrangement of character strings 25 to 27 and 30 is changed as shown in a lower stage in FIG. 5. In this case, when all the character strings and symbols are displayed without using the first character displaying process described above, not only the character strings 26, 27 and the symbol 28 overlap with one another but also the character string 30 and the symbol 29 overlap with each other. As a result, it becomes difficult to interpret the character strings 26, 27, 30 and the symbols 28, 29. On the contrary, when the above first character displaying process is used, it is made possible to interpret the character strings 27, 30 and the symbol 28 because the character string 26 and the symbol 29 are eliminated as shown in a lower stage in FIG. 5.

In order to implement such a character displaying process, in tables assigned to the symbol 28 and the character string 27, the display control information corresponding to the rotation angle 90° (270°) is set to ON. In the table T1 assigned to the character string 26, the display control information corresponding to the rotation angle 90° (270°) is set to be OFF. Also, in a table assigned to the character string 30, the display control information corresponding to the rotation angle 90° (270°) is set to be ON, and, in a table assigned to the symbol 29, the display control information corresponding to the rotation angle 90° (270°) is set to be OFF.

In the case shown in FIG. 5, when the map is rotated by 90° from the lower stage in FIG. 5 in a right direction, the character string 26 and the symbol 29 which has been eliminated is displayed again.

As described above, according to the navigation system S of the embodiment of the present invention, when the map is rotated to be displayed, a plurality of character strings and/or symbols can be prevented from overlapping with one another and it can be prevented that it becomes difficult to determine or interpret character strings and/or symbols. Also, since whether or not character strings and/or symbols should be displayed is determined based upon the priority set according to the necessity for displaying the character strings and/or symbols, the character strings and /or symbols with a higher necessity can be displayed preferentially, so that a map display easier to see can be effected.

(III) Character Displaying Process for Bird Eye View

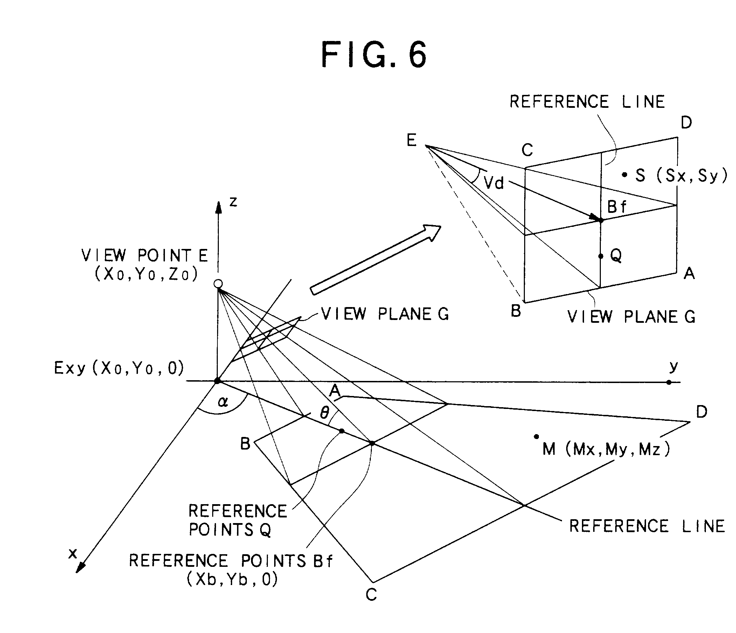

Referring to FIGS. 6 to 10, a bird eye generating process in the vehicle navigation system S and the character displaying process (a second character displaying process) executed in the bird eye generating process will be described.

The vehicle navigation system S of this embodiment can display the map not only as a plan view but also as a bird eye view. Namely, the vehicle navigation system S has a function transforming a map of a plan view (2-dimension) into a bird eye view (one-point perspective projection view) seen downward in the advancing direction of the vehicle to display the bird eye view. For example, the vehicle navigation system S can switch a display of the map from the plan view to the bird eye view according to the driver's instruction or automatically. Furthermore, the vehicle navigation system S has a function scrolling the map which has been displayed as the bird eye view in accordance with the movement of the vehicle.

FIG. 6 shows the bird eye view generating process. In FIG. 6, the bird eye view is an image generated by projecting a video image, which is obtained by seeing a map ABCD region represented on the basis of a $(X, Y)$ plane in $(X, Y, Z)$ coordinate axes downwardly from a view point $E$ $(Xo, Yo, Zo)$ towards a reference point $Bf$ $(Xb, Yb, 0)$ on the $(X, Y)$ plane at an angle $\theta$ of depression, onto a view plane $G$ (namely, the display 16) disposed to be vertical to the viewing direction. At this time, the viewing direction from the view point $E$ is assumed to have an angle $\alpha$ on the basis of X axis on XY plane. That is, the angle $\alpha$ is, for example, the advancing direction of the vehicle.

Furthermore, the distance between the view point $E$ and the view plane $G$ is assumed to be Vd. A central line (a vertical line) on the view plane $G$ is determined to be a reference line and a predetermined reference point $Q$ on the reference line is assumed to be a reference point on the point perspective projection. Namely, the reference point $Q$ is a point on a straight line connecting the view point $E$ and the reference point $Bf$ when it is assumed as the XY plane on the map.

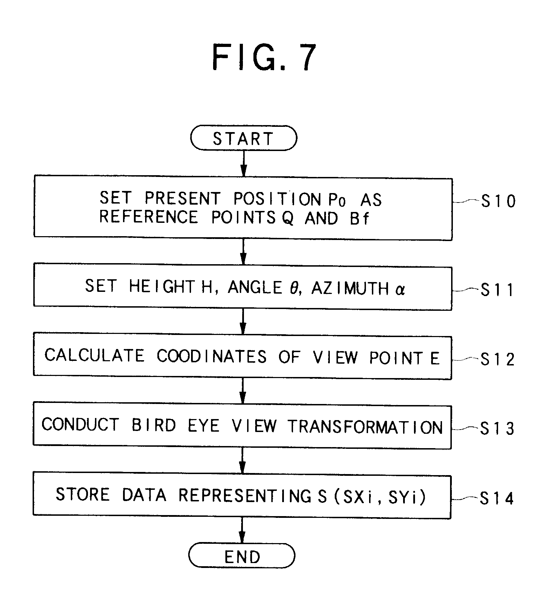

FIG. 7 is a flowchart showing the bird eye view generating process. The bird eye view generating process will particularly be described according to FIGS. 6 and 7. It should be understood that the bird eye view generating process is mainly executed by the CPU 6 when it is required to display a map on the display 16 as the bird eye view.

Also, a program corresponding to the flowchart of FIG. 7 is preliminarily stored in the DVD-ROM disk DK as a control program, and it is read out via the DVD-ROM drive 11 as occasion demands.

In a process for generating bird eye map data, there are a method where the present position Po of the vehicle is assumed to be a position of a leg of a vertical line suspended on the map (on the (X, Y) plane) from the view point E and a method where the present position Po is assumed as the reference point Q. As both the methods are not different from each other basically, a case will be explained where the present position Po is the reference point Q and this reference point Q is consistent with the reference point Bf for clarifying the explanation.

As shown in FIG. 7, in the process for generating the bird eye map data, the present position Po is at first set as the reference point Q and the reference point Bf (step S10). Next, when a height h of the view point E is input from the input device 10, the angle $\theta$ of depression is calculated on the basis of the input data and the above display azimuth $\alpha$ is read out (step S11).

Next, the coordinates of the view point E (Xo, Yo, Zo) are calculated on the basis of the reference point Bf (Xb, Yb, 0) according to the following equations (step S12)

$$Xo = Xb - h \times \cos \alpha / \tan \theta$$

$$Yo = Yb - h \times \sin \alpha / \tan \theta$$

$$Zo = h$$

Next, a bird eye view transformation is conducted for the map data on the basis of the coordinates of the view point E calculated in the above manner (step S13). In step S13, when an arbitrary point M (Mx, My, Mz) on the XY plane is coordinate-transformed to a point S (Sx, Sy) on a corresponding view plane G, the following relation equations (determinant) is used.

$$\begin{pmatrix} Ex \\ Ey \\ Ez \\ 1 \end{pmatrix} = \begin{pmatrix} 1 & 0 & 0 & 0 \\ 0 & \sin\theta & \cos\theta & 0 \\ 0 & -\cos\theta & \sin\theta & 0 \\ 0 & 0 & 0 & 1 \end{pmatrix} \begin{pmatrix} \sin\alpha & -\cos\alpha & 0 & 0 \\ \cos\alpha & \sin\alpha & 0 & 0 \\ 0 & 0 & 1 & 0 \\ 0 & 0 & 0 & 1 \end{pmatrix}$$

$$\begin{pmatrix} 1 & 0 & 0 & -Xo \\ 0 & 1 & 0 & -Yo \\ 0 & 0 & 1 & -Zo \\ 0 & 0 & 0 & 1 \end{pmatrix} \begin{pmatrix} Mx \\ My \\ Mz \\ 1 \end{pmatrix}$$

$$Sx = Ex \times Vd / -Ez$$

$$Sy = Ey \times Vd / -Ez$$

$$Sz = 0$$

where "Ex", "Ey" and "Ez" are coordinate values in a 3-dimensional display of the point M seen from the view point E (where the depth from the view point is also added), and, after the coordinate of the point M is transformed into a coordinate shown with "Ex", "Ey" and "Ez", a transformation into the point S on the view plane G is effected using the coordinate.

When the point S (Sx, Sy) about the one point M (Sz is omitted as it is originally 0) is calculated, all points M on the map data to be transformed are coordinate-transformed into the point S on the similarly corresponding view plane G, and, after the coordinate transformation about all the points M is completed, the data obtained by the coordinate transformation is stored in the RAM 8 and the control proceeds to the original main navigation program (step S14). In accordance with the above operation, the bird eye view generating process is terminated.

The vehicle navigation system S according to the embodiment of the present invention executes the novel second character displaying process described below almost simultaneously with the bird eye view generating process.

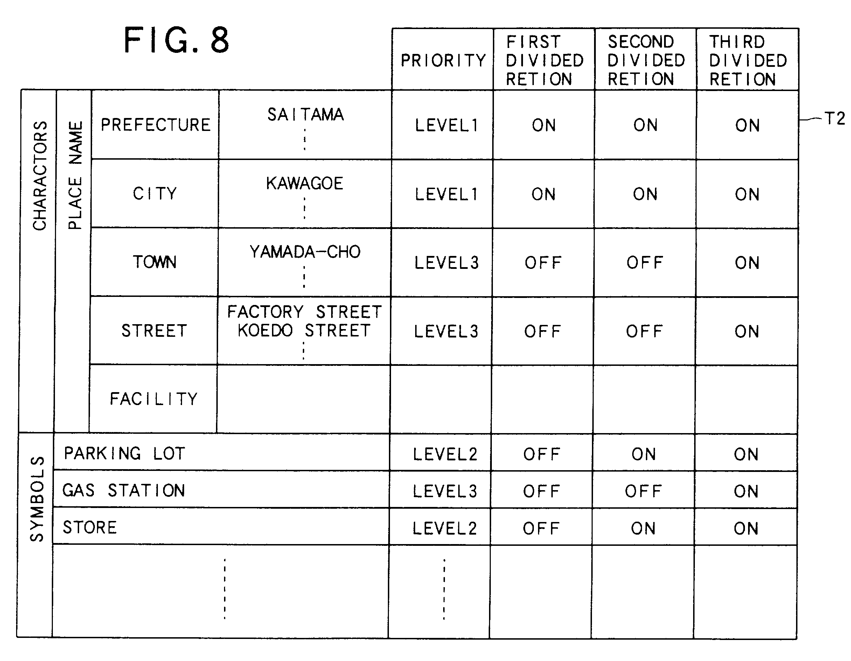

FIG. 8 shows a second table T2 for implementing this character displaying process. The table T2 is stored in the DVD-ROM disk DK. When the second character displaying process is executed, the table T2 is read out from the DVD-ROM disk DK by the DVD-ROM drive 11 and it is recorded, for example, in the RAM 8.

In the table T2, second display control information is described so as to correspond to character strings and symbols to be displayed together with the map one by one. The character strings to be displayed together with the map are individual character strings representing names of roads, names of institutions, place names, and the other geographic information. Also, the symbols to be displayed together with the map are individual symbols regarding symbols showing institutions, map symbols and the other geographic symbols.

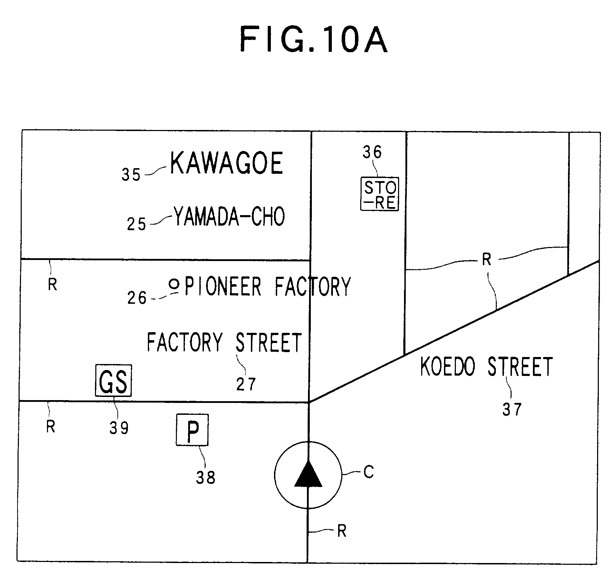

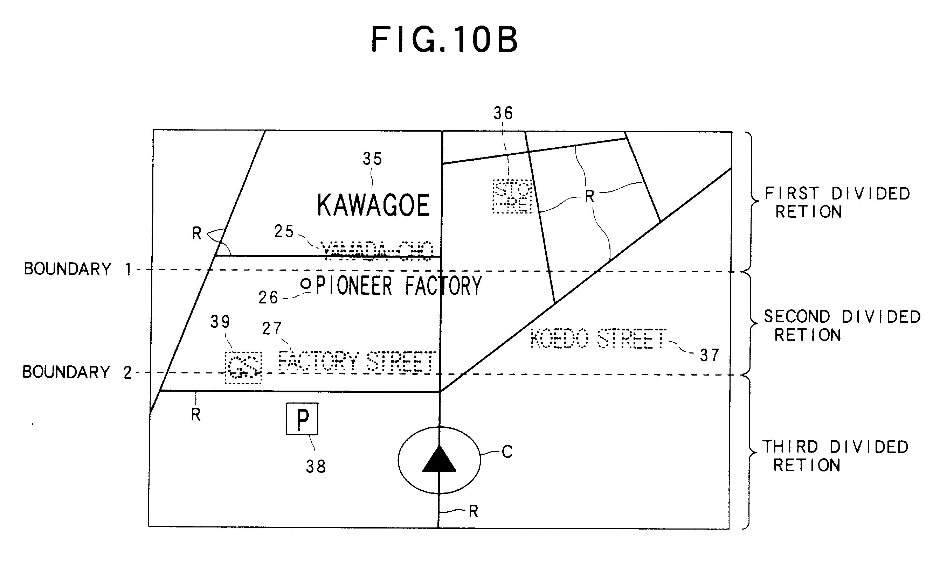

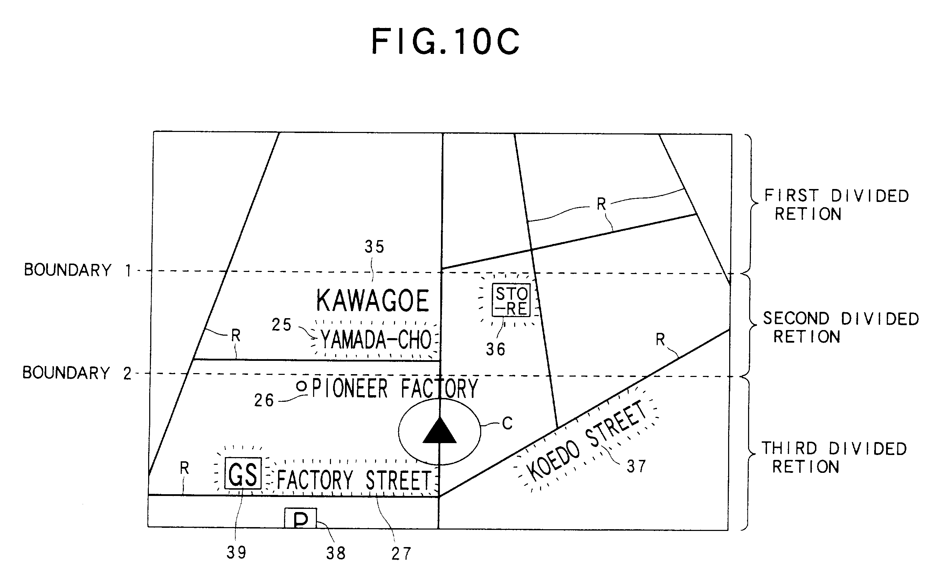

As shown in FIG. 8, the second character control information includes (i) the priority (levels 1 to 3) of the character string or symbol, (ii) information (ON/OFF) showing whether or not the character string or symbol should be displayed on a first divided region, (iii) information (ON/OFF) showing whether or not the character string or symbol should be displayed on a second divided region, and (iv) information (ON/OFF) showing whether or not the character string or symbol should be displayed on a third divided region. The "priority" is determined on the basis of the necessity for displaying the character string or symbol together with the map. The priority is set, for example, at the same reference as the first display control information (the first table T1) described above. Further, as shown in FIG. 10, the map is divided into three regions by two boundary lines crossing the line of sight in the bird eye view (i.e, a line connecting between the view point E and the reference point B in FIG. 6). The "first divided region" means a region farthest from the view point among the map displayed on the display 16. The "third divided region" means a region nearest to the view point among the map displayed on the display 16. The "second divided region" means a region positioned between the first divided region and the third divided region.

Although the first, second and third regions are set on the basis of the view point, they may be set on the basis of the present position of the vehicle. For example, the first divided region may be set as a region farthest from the present position of the vehicle. The third divided region may be set as a region nearest to the present position of the vehicle and within which the present position of the vehicle is located. The second divided region may set as a region positioned between the first divided region and the third divided region.

The second display control information described in the table T2 is prepared by a manufacturer of the navigation system S or the like as follows: First, the manufacturer displays the map as the bird eye view actually or experimentally, and displays all character strings and symbols which can be displayed on a map along with the map. Next, the manufacturer determines the display (ON/OFF) of each of the character strings and symbols so as to read out the same exactly on the map. At this time, the manufacturer takes in consideration the priority of each of the character strings and symbols and the region which has been displayed, and determines the display (ON/OFF) of each of the character strings and symbols.

For example, since the first divided region is a region farthest from the view point, the contraction scale of the map becomes relatively small. As a result, a relatively large number of character strings and symbols are displayed. Accordingly, when all of the character strings and symbols which can be displayed on the first divided region are displayed, the character strings and the symbols overlap with one another in some cases. In this case, the manufacturer determines the display (ON/OFF) of each of the character strings and symbols to the extent where the character strings and symbols are prevented from overlapping.

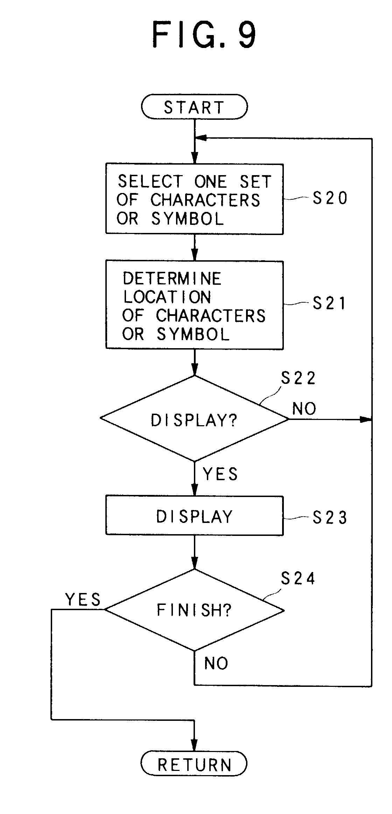

FIG. 9 is a flowchart showing the second character displaying process using the table T2. This character displaying process is executed mainly by the CPU 6. for example, immediately after the bird eye view generating process mentioned above. Each time the map is rewritten according to the advancing direction of the vehicle in order to implement scrolling of the map, the character displaying process is executed. Also, a program corresponding to the flowchart in FIG. 9 is in advance stored in the DVD-ROM disk DK as a control program, and it is read out through the DVD-ROM drive 11 as occasion demands.

In the character displaying process shown in FIG. 9, the CPU 9 first selects one of the character strings and symbols which can now be displayed on the display 16 together with the map (step S 20), and it reads out a second reproducing information corresponding to the selected character string or symbol from the table T2. Next, the CPU 6 determines whether the present display position of the selected character string on the bird eye view is located within the first divided region, the second divided region or the third divided region (step S21). This determination is made by detecting the present position of the vehicle and the actual location of the object indicated by the selected character string or symbol. For example, the determination is made by comparing the former with the later and calculating the distance between them.

Next, the CPU 6 determines whether the selected character string or symbol should be displayed on the basis of the determination result in step S21, or a corresponding reproducing control information is ON (step S22). When the reproducing control information is ON, the CPU 6 displays the character string or symbol (step S23).

Next, the CPU 6 determines whether or not processes of steps 20 to 23 have been performed on all the character strings and symbols which can be displayed on the map (step S24). When the processes of steps 20 to 23 have been performed on all the character strings and symbols which can be displayed on the map, the CPU 6 terminates this character displaying process. On the other hand, when the processes of steps 20 to 23 have not performed on all the character strings and symbols yet, the CPU 6 executes the process of step 20 to select the character string or symbol which has not been processed yet, and thereafter the processes of steps S20 to S24 are executed repeatedly.

Referring to FIGS. 10A to 10C, one example of the above second character displaying process will be explained. As shown in FIG. 10A, first, the map of a plan view is displayed on the display 16, and the character string "YAMADA-CHO" 25, the character string "PIONEER FACTORY" 26, the character string "FACTORY STREET" 27, a character string "KAWAGOE" 35, a character string "KOEDO STREET" 37, a symbol 36 representing a store, a symbol 38 representing a parking lot, a symbol 39 representing a gas station, and his/her own vehicle position symbol C representing the present position of his/her own vehicle are displayed on the map in addition to roads R and the like.

Next, as shown in FIG. 10B, when the plan view is transformed into the bird eye view through the bird eye view generating process, the character string 25 and the symbol 36 are eliminated and only the character string 35 are displayed in the first divided region. Also, the character strings 27 and 37, and the symbol 35 are eliminated and only the character string 26 is displayed in the second divided region. Furthermore, his/her own vehicle position mark C and the symbol 38 are displayed in the third divided region where there is no character string or symbol to be eliminated.

In order to implement such a display, in the table T2, the character string 25 and the symbol 36 are described as OFF and the character string 35 is described as ON in the first divided region. Also, in the second divided region, the character strings 27 and 37, and the symbol 39 are described as OFF, only the character string 26 is described as ON. Furthermore, in the third divided region, the symbol 38 is described as ON.

Next, when the vehicle advances so that the map is scrolled and the displaying range of the map is changed from FIG. 10B to FIG. 10C, the character string 25 and the symbol 36 which have been eliminated up to now are displayed together with the character string 35 in the second divided region, while the symbol 39, and the character strings 27 and 37 which have been eliminated until now are also displayed along with the character string 25 and the symbol 38 in the third divided region.

In order to implement such a display, in the table T2, the character string 25 and the symbol 36 are described to be displayed together with the character string 35 in the second divided region. Also, the character strings 27 and 37, and the symbol 39 are described to be displayed along with the character string 26 and the symbol 38 in the third divided region.

As set forth above, when the map is to be displayed as the bird eye view, the number of character strings and symbols can be reduced as the position to be displayed on the map is made farther from the view point or the present position of the vehicle. That is, the name(s) of road(s), name place(s), map symbol(s), and the like positioned near to the present position of the vehicle can be displayed relatively in detail, and the name(s) of road(s), name place(s), map symbol(s), and the like positioned far from the present position of the vehicle can be omitted partially to be displayed. Accordingly, the map can be displayed to be easy to see.

Furthermore, since the second character displaying process is executed while the map of the bird eye view is being scrolled according to the advance of the vehicle, the display of the character string(s) and symbol(s) can be changed according to the scroll of the map. Therefore, the map can be displayed to be easy to see.

Also, since a determination is made about whether or not the character string(s) and/or symbol(s) should be displayed on the basis of the priority set according to the necessity for displaying the character string(s) or symbol(s), the character string(s) or symbol(s) with a higher priority can be displayed preferentially, thereby displaying the map so as to be easy to see.

In the above second character displaying process, the first, second, and third divided regions are set based upon the distance between the position on the map and the view point or the present position of the vehicle. However, the present invention is not limited to such a setting, but the divided regions may be set on the basis of change in contraction scale of the map displayed as the bird eye view.

Also, when the first character displaying process and the second character displaying process are substantially concurrently executed, the character string(s) and symbol(s) can be displayed so as to be easy to see.

**Claims**

1. An apparatus (S) for displaying a map and a plurality of map information pieces on a display panel (16) for use in a navigation system (S), the plurality of map information pieces including at least a plurality of sets of characters (25, 26, 27, 30) representing names of spots existing on the map, respectively, characterised in that the apparatus comprises:

a map display device (12) for displaying the map on the display panel;

a map rotation device (6) for rotating the map on the display panel;

a selection device (6) for selecting one of the plurality of map information pieces;

a determination device (6) for determining according to an angle of a rotation of the map whether or not the selected map information piece is displayed on the map; and

an information display device (6, 12) for displaying the selected map information piece on the map if the determination device determines that the selected map information piece is displayed on the map.

2. The apparatus according to claim 1, wherein the determination device (6) comprises an overlap determination device for determining whether or not there is no map information piece that overlaps with the selected map information piece, among the plurality of map information pieces except for the selected map information piece, according to the angle of the rotation of the map.

3. The apparatus according to claim 1 or 2, wherein the determination device (6) comprises a priority comparison device for comparing priority of the selected map information piece with priority of any one of the plurality of map information pieces that overlaps with the selected map information piece.

4. The apparatus according to any one of claims 1 through 3, wherein the determination device (6) comprises a storage device for storing a table (T1) in which data indicating for each predetermined unit of the angle of the rotation of the map whether or not each of the plurality of map information pieces is displayed on the map.

5. The apparatus according to any one of claims 1 through 4, wherein the plurality of map information pieces includes a plurality of sets of characters (25, 26, 27, 30) representing names of places, roads, facilities and institutions existing on the map, respectively.

6. The apparatus according to any one of claims 1 through 5, wherein the plurality of map information pieces includes a plurality of symbols (28, 29) representing names of places, roads, facilities and institutions existing on the map, respectively.

7. An apparatus (S) for displaying a map and a plurality of map information pieces on a display panel (16) for use in a navigation system (S), the plurality of map information pieces including at least a plurality of sets of characters (25, 26, 27, 35, 37) representing names of spots existing on the map, respectively, characterised in that the apparatus comprises:

a map displaying device (6, 12) for displaying the map as a bird eye view on the basis of a predetermined view point (E) and a predetermined line of sight (E-Bf);

a selection device (6) for selecting one of the plurality of map information pieces;

a first determination device (6) for determining a display position of the selected map information piece in a direction along the predetermined line of sight in the bird eye view within the map;

a second determination device (6) for determining according to the display position of the selected map information piece whether or not the selected map information piece is displayed on the map; and

a display control device (6, 12) for displaying the selected map information piece on the map if the determination device determines that the selected map information piece is displayed on the map.

8. The apparatus according to claim 7, wherein the first determination device (6) divides the map into a plurality of regions by boundary lines each crossing the predetermined line of sight in the bird eye view, and determines which of the plurality of regions the selected map information piece is positioned in.

9. The apparatus according to claim 8, wherein the second determination device (6) determines whether or not the selected map information piece is displayed on the map, in such a way that the number of the map information pieces to be displayed within any one of the plurality of regions located distant from the predetermined view point in the bird eye view is smaller than the number of the map information pieces to be displayed within any one of the plurality of regions located near the view point.

10. The apparatus according to claim 8 or 9, wherein the second determination device (6) comprises a storage device for storing a table (T2) in which data indicating for each of the plurality of regions whether or not each of the plurality of map information pieces is displayed on the map.

11. The apparatus according to any one of claims 7 through 10, wherein the second determination device (6) determines according to the display position of the selected map information piece and priority of the selected map information piece whether or not the selected map information piece is displayed on the map.

12. The apparatus according to any one of claims 7 through 11, wherein the map displaying device (6, 12) scrolls the map according to a movement of a movable body on which the apparatus (S) is mounted.

13. The apparatus according to any one of claims 7 through 12, wherein the plurality of map information pieces includes a plurality of sets of characters (25, 26, 27, 35, 37) representing names of places, roads, facilities and institutions existing on the map, respectively.

14. The apparatus according to any one of claims 7 through 13, wherein the plurality of map information pieces includes a plurality of symbols (36, 38, 39) representing names of places, roads, facilities and institutions existing on the map, respectively.

15. A program storage device (DK) readable by a computer, tangibly embodying a program of instructions executable by the computer to perform a method of displaying a map and a plurality of map information pieces on a display panel (16) for use in a navigation system, the plurality of map information pieces including at least a plurality of sets of characters (25, 26, 27, 30) representing names of spots existing on the map, respectively, characterised in that the method comprises the processes of:

   displaying the map on the display panel;
   rotating the map on the display panel;
   selecting one of the plurality of map information pieces;
   determining according to an angle of a rotation of the map whether or not the selected map information piece is displayed on the map; and
   displaying the selected map information piece on the map if it is determined in the determining process that the selected map information piece is displayed on the map.

16. The program storage device according to claim 15, wherein the determination process comprises the process of determining whether or not there is no map information piece that overlaps with the selected map information piece, among the plurality of map information pieces except for the selected map information piece, according to the angle of the rotation of the map.

17. The program storage device according to claim 15 or 16, wherein the determination process comprises the process of comparing priority of the selected map information piece with priority of any one of the plurality of map information pieces that overlaps with the selected map information piece.

18. The program storage device according to any one of claims 15 through 17, wherein the plurality of map information pieces includes a plurality of sets of characters (25, 26, 27, 30) representing names of places, roads, facilities and institutions existing on the map, respectively.

19. The program storage device according to any one of claims 15 through 18, wherein the plurality of map information pieces includes a plurality of symbols (28, 29) representing names of places, roads, facilities and institutions existing on the map, respectively.

20. A program storage device (DK) readable by a computer, tangibly embodying a program of instructions executable by the computer to perform a method of displaying a map and a plurality of map information pieces on a display panel (16) for use in a navigation system, the plurality of map information pieces including at least a plurality of sets of characters (25, 26, 27, 35, 37) representing names of spots existing on the map, respectively, characterised in that the method comprises the processes of:

   displaying the map as a bird eye view on the basis of a predetermined view point and a predetermined line of sight;
   selecting one of the plurality of map information pieces;
   firstly determining a display position of the selected map information piece in a direction along the predetermined line of sight in the bird eye view within the map;
   secondly determining according to the display position of the selected map information piece whether or not the selected map information piece is displayed on the map; and

displaying the selected map information piece on the map if it is determined that the selected map information piece is displayed on the map.

21. The program storage device according to claim 20, wherein the first determining process comprising the processes of:

dividing the map into a plurality of regions by boundary lines each crossing the predetermined line of sight in the bird eye view; and

determining which of the plurality of regions the selected map information piece is positioned in.

22. The program storage device according to claim 21, wherein, in the determining process, it is determined whether or not the selected map information piece is displayed on the map, in such a way that the number of the map information pieces to be displayed within any one of the plurality of regions located distant from the predetermined view point in the bird eye view is smaller than the number of the map information pieces to be displayed within any one of the plurality of regions located near the view point.

23. The program storage device according to any one of claims 20 through 22, wherein, in the second determining process, it is determined according to the display position of the selected map information piece and priority of the selected map information piece whether or not the selected map information piece is displayed on the map.

24. The program storage device according to any one of claims 20 through 23, wherein the plurality of map information pieces includes a plurality of sets of characters (25, 26, 27, 35, 37) representing names of places, roads, facilities and institutions existing on the map, respectively.

25. The program storage device according to any one of claims 20 through 24, wherein the plurality of map information pieces includes a plurality of symbols (36, 38, 39) representing names of places, roads, facilities and institutions existing on the map, respectively.

# FIG. 1

# FIG. 2A

| (CHARACTERS) PIONEER FACTORY | |
|---|---|
| ROTATION ANGLE | DISPLAY ON/OFF |
| 0° (360°) | ON |
| 10° | ON |
| 20° | OFF |
| ⋮ | ⋮ |
| 340° | ON |
| 350° | OFF |

T1

# FIG. 2B

0° (360°)

90° ——————— 270°

180°

# FIG. 3

```
            ( START )
                │
                ▼
    ┌─────────────────────┐
    │ OBTAIN ROTATION     │── S1
    │ ANGLE OF MAP        │
    └─────────────────────┘
                │
                ▼
YES          ╱────────╲      S2
    ◄───────< PROCESS IS     >
             ╲ FINISHED? ╱
              ╲────────╱
                │ NO
                ▼
    ┌─────────────────────┐
    │ SELECT ONE SET      │── S3
    │ OF CHARACTERS       │
    └─────────────────────┘
                │
                ▼
             ╱────────╲       S4
            ╱ SELECTED  ╲  NO
           < CHARACTERS  >─────►
            ╲ SHOULD BE ╱
             ╲DISPLAYED?╱
              ╲────────╱
                │ YES
                ▼
    ┌─────────────────────┐
    │      DISPLAY        │── S5
    └─────────────────────┘
                │
                ▼
          ( RETURN )
```

# FIG. 4

25

YAMADA-CHO

R

26

PIONEER FACTORY○

FACTORY STREET

R

27

16

( MAP IS ROTATED
BY 30° IN RIGHT
DIRECTION )

25

YAMADA-CHO

R

26

PIONEER FACTORY○

FACTORY STREET

R

27

16

# FIG. 5

MAP IS ROTATED
BY 90° IN RIGHT
DIRECTION

MAP IS ROTATED
BY 90° IN LEFT
DIRECTION

# FIG. 6

REFERENCE LINE

E

C

D

Vd

S (Sx, Sy)

Bf

Q

A

B

VIEW PLANE G

z

VIEW POINT E
(Xo, Yo, Zo)

VIEW PLANE G

Exy (Xo, Yo, 0)

y

α

θ

A

D

B

M (Mx, My, Mz)

C

REFERENCE
POINTS Q

REFERENCE LINE

x

REFERENCE POINTS Bf
(Xb, Yb, 0)

EP 0 953 826 A2

# FIG. 7

```
                    ( START )
                        │
                        ▼
  ┌──────────────────────────────────────────┐
  │  SET  PRESENT  POSITION P₀  AS            │──── S10
  │  REFERENCE  POINTS Q  AND  Bf             │
  └──────────────────────────────────────────┘
                        │
                        ▼
  ┌──────────────────────────────────────────┐
  │  SET  HEIGHT H,  ANGLE θ,  AZIMUTH α      │──── S11
  └──────────────────────────────────────────┘
                        │
                        ▼
  ┌──────────────────────────────────────────┐
  │  CALCULATE  COODINATES  OF  VIEW POINT E  │──── S12
  └──────────────────────────────────────────┘
                        │
                        ▼
  ┌──────────────────────────────────────────┐
  │  CONDUCT  BIRD EYE VIEW TRANSFORMATION    │──── S13
  └──────────────────────────────────────────┘
                        │
                        ▼
  ┌──────────────────────────────────────────┐
  │  STORE  DATA  REPRESENTING S (SXi, SYi)   │──── S14
  └──────────────────────────────────────────┘
                        │
                        ▼
                    ( END )
```

# FIG. 8

| | | | | PRIORITY | FIRST DIVIDED RETION | SECOND DIVIDED RETION | THIRD DIVIDED RETION | |
|---|---|---|---|---|---|---|---|---|
| CHARACTORS | PLACE NAME | PREFECTURE | SAITAMA ⋮ | LEVEL1 | ON | ON | ON | T2 |
| | | CITY | KAWAGOE ⋮ | LEVEL1 | ON | ON | ON | |
| | | TOWN | YAMADA-CHO ⋮ | LEVEL3 | OFF | OFF | ON | |
| | | STREET | FACTORY STREET KOEDO STREET ⋮ | LEVEL3 | OFF | OFF | ON | |
| | | FACILITY | | | | | | |
| SYMBOLS | PARKING LOT | | | LEVEL2 | OFF | ON | ON | |
| | GAS STATION | | | LEVEL3 | OFF | OFF | ON | |
| | STORE | | | LEVEL2 | OFF | ON | ON | |
| | ⋮ | | | ⋮ | | | | |

# FIG. 9

```
                    ┌──────────────┐
                    │    START     │
                    └──────┬───────┘
                           │
            ┌──────────────▼──────────┐
            │ SELECT ONE SET          │
            │ OF CHARACTERS           │── S20
            │ OR SYMBOL               │
            └──────────────┬──────────┘
                           │
            ┌──────────────▼──────────┐
            │ DETERMINE               │
            │ LOCATION                │
            │ OF CHARACTERS           │── S21
            │ OR SYMBOL               │
            └──────────────┬──────────┘
                           │            S22
                      ◇───────────◇  NO
                      │  DISPLAY?  │──────────┐
                      ◇───────────◇           │
                           │ YES             │
            ┌──────────────▼──────────┐       │
            │      DISPLAY            │── S23  │
            └──────────────┬──────────┘       │
                           │           S24    │
              YES     ◇───────────◇           │
         ┌────────────│  FINISH?   │          │
         │            ◇───────────◇           │
         │                 │ NO               │
         │                 └──────────────────┘
         │
    ┌────▼─────┐
    │  RETURN  │
    └──────────┘
```

# FIG.10A

KAWAGOE 35

YAMADA-CHO 25

STO-RE 36

PIONEER FACTORY 26

R

FACTORY STREET 27

KOEDO STREET 37

GS 39

R

P 38

R

C

R

EP 0 953 826 A2

# FIG.10B

KAWAGOE 35

R 25 YAMADA-CHO

26 PIONEER FACTORY

39 27

GS FACTORY STREET

P

38

C

R

36

STORE

R

KOEDO STREET 37

FIRST DIVIDED RETION

SECOND DIVIDED RETION

THIRD DIVIDED RETION

BOUNDARY 1

BOUNDARY 2

EP 0 953 826 A2

# FIG.10C

FIRST DIVIDED RETION

BOUNDARY 1

35

KAWAGOE

25 YAMADA-CHO

R

STO -RE

36

R

SECOND DIVIDED RETION

BOUNDARY 2

26 PIONEER FACTORY

C

KOEDO STREET

37

THIRD DIVIDED RETION

R

GS FACTORY STREET

P

39 38 27

EP 0 953 826 A2